# EUROPEAN PATENT SPECIFICATION

(11) **EP 2 708 773 B1**
(45) Date of publication and mention of the grant of the patent: **25.10.2017**
(21) Application number: 13160385.4
(22) Date of filing: 21.03.2013
(51) Int. Cl.: F16H 3/00

(54) **Transmission apparatus and vehicle**
Übertragungsvorrichtung und Fahrzeug
Appareil de transmission et véhicule

(30) Priority: 14.09.2012 JP 2012203308
(43) Date of publication of application: 19.03.2014
(73) Proprietor: Yamaha Hatsudoki Kabushiki Kaisha, Iwata-shi, Shizuoka 438-8501 (JP)
(72) Inventor: Shibasaki, Shouji, Iwata-shi, Shizuoka 438-8501 (JP)
(74) Representative: Grünecker Patent- und Rechtsanwälte PartG mbB

(56) References cited:
- EP-A1- 1 770 315
- EP-A1- 2 042 783
- EP-A1- 2 372 181
- EP-A1- 2 400 185
- US-A1- 2008 099 305
- US-A1- 2008 099 306
- US-A1- 2009 084 651

## Description

The present invention relates to a dog clutch-type transmission apparatus according to the preamble of independent claim 1 and a vehicle. Such a dog clutch-type transmission apparatus can be taken from the prior art document EP 2 372 181 A1**.**

According to a transmission apparatus disclosed in JP 2012-77889 A, a gear (hereinafter referred to as a stationary gear) is rotatable mounted on a drive shaft under restriction on movement in the axial direction, and in the above, the middle position in the sliding surface width of the stationary gear on the drive shaft and the middle position in the engaging tooth width of the stationary gear are positioned substantially the same in the axial direction in order to prevent the stationary gear from inclining.

According to the above described conventional transmission apparatus, the stationary gear is reliably prevented from inclining when no drive force is transmitted from the counter shaft to the drive shaft. However, a drive force from the counter shaft is transmitted from the stationary gear to the drive shaft via a gear engaged with the stationary gear, namely, a gear (hereinafter referred to as a movable gear) functioning as a dog selector that is integrally mounted on the drive shaft so as to be rotatable with the drive shaft and free to reciprocate in the axial direction. As described above, when an engaging part of the stationary gear that is engaged with a gear mounted on the counter shaft is positioned apart in the axial direction from an engaging part of the movable gear engaged with the stationary gear, the engaging part being engaged with the drive shaft, there is a possibility that the stationary gear and the movable gear be inclined when transmitting a drive force.

The present invention has been conceived in view of the above described situation, and aims to provide a transmission apparatus and a vehicle capable of preventing a gear from inclining when transmitting a drive force.

According to the present invention said object is solved by a dog clutch-type transmission apparatus having the features of independent claim 1. Preferred embodiments are laid down in the dependent claims. Accordingly, it is provided a transmission apparatus embodied as a dog clutch-type transmission apparatus comprising a drive shaft, a driven shaft, a first gear, a rail collar, a selector, a shift fork, and a second gear. The first gear has a dog hole and is mounted relatively rotatable on one of the drive shaft and the driven shaft. The rail collar is mounted not relatively rotatable on the one of the drive shaft and the driven shaft. The selector has a dog tooth, and is spline-connected to the rail collar so as to be incapable of relative rotation relative to the rail collar and capable of movement in the axial direction. The shift fork moves the selector in the axial direction. The second gear is mounted not relatively rotatable on another of the drive shaft and the driven shaft, and engaged with the first gear. Under a condition in which a drive force is transmitted from the drive shaft to the driven shaft via the first gear, the selector, and the second gear, a part of the first gear that is engaged with the second gear and a part of the selector that is engaged with the rail collar are overlapped in the diameter direction.

A vehicle according to the present invention has the above described transmission apparatus.

According to the present teaching, a part of the first gear that is engaged with the second gear and a part of the selector that is engaged with the rail collar are overlapped in the diameter direction, and therefore, parts of a power transmission path from the drive shaft to the driven shaft overlap each other in the diameter direction. With the above, it is possible to prevent the gear from including in transmitting a drive force.

### BRIEF DESCRIPTION OF THE DRAWINGS

FIG. 1 is a side view of a two-wheeled motor vehicle;
FIG. 2 is a cross sectional view of a transmission apparatus; and
FIG. 3 is an enlarged view showing major elements shown in FIG. 2.

### DESCRIPTION OF EMBODIMENTS

An embodiment of a transmission apparatus and a vehicle according to the present teaching will be described with reference to the diagrams.

As a vehicle according to the present teaching, preferably, a saddled-type vehicle for a user to sit on the seat thereof while straddling, such as, for example, a two-wheeled motor vehicle (including a scooter), an all-terrain vehicle, a snowmobile, and so forth is preferable. In the example described below, an embodiment employing a two-wheeled motor vehicle as a vehicle according to the present teaching will be described.

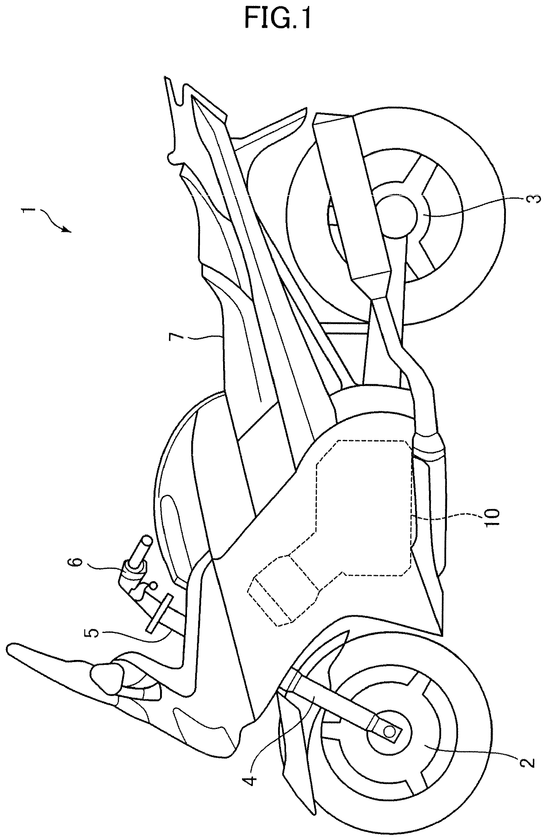

FIG. 1 is a side view of a two-wheeled motor vehicle 1 according to one aspect of the present teaching. The two-wheeled motor vehicle 1 has an engine unit 10. A front wheel 2 is mounted ahead of the engine unit 10, while a rear wheel 3 is mounted at the rear of the engine unit 10. The front wheel 2 is supported at the lower end of a front fork 4. A steering shaft 5 is connected to the upper part of the front fork 4, being rotatably supported in the frontmost part of a vehicle frame (not shown). A steering 6 is mounted above the steering shaft 5. The steering 6, the front fork 4, and the front wheel 2 are integrally rotatable in the left-right direction with the steering shaft 5 at the middle. A seat 7 for a user to sit thereon while straddling is mounted behind the steering 6. A torque output from the engine unit 10 is transmitted to the rear wheel 3 via a torque transmitting member (not shown), such as a chain, a belt, a shaft, and so forth. Note that the engine unit 10 includes a transmission apparatus 30 according to one aspect of the present teaching to be described below.

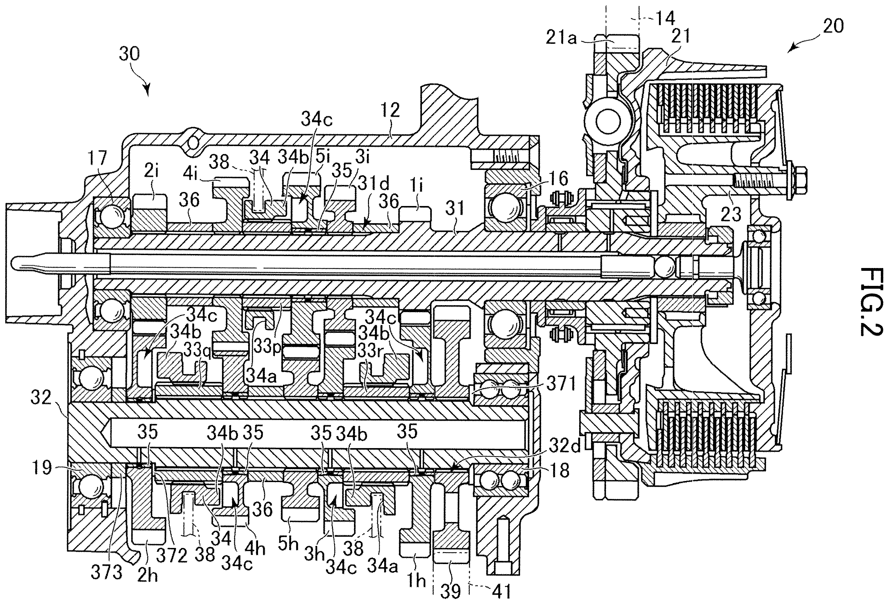

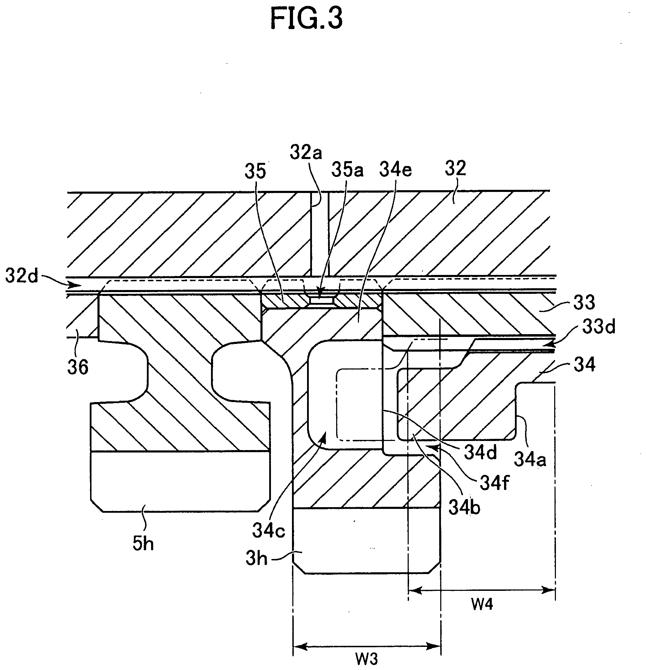

FIG. 2 is a cross sectional view of the transmission apparatus 30 according to one aspect of the present teaching. FIG. 3 is an enlarged view showing major elements shown in FIG. 2. These diagrams show a cross sectional structure of the transmission apparatus 30 sectioned by a flat surface passing the drive shaft 31 and the driven shaft 32. The drive shaft 31 and the driven shaft 32 included in the transmission apparatus 30 are supported by an engine case 12 via bearings 16 to 19. A clutch 20 for transmitting/disconnecting a torque from a crank shaft (not shown) is mounted on an end portion of the drive shaft 31. A drive gear 39 for transmitting a torque to an output shaft (not shown) is mounted on the driven shaft 32, being engaged with a following gear 41 mounted on the output shaft.

The clutch 20 has a driving member 21 capable of relative rotation relative to the drive shaft 31 of the transmission apparatus 30. A primary gear 21a is mounted on the driving member 21, being engaged with the primary gear 14 mounted on a crank shaft (not shown). The clutch 20 further has a following member 23 incapable of relative rotation relative to the drive shaft 31 of the transmission apparatus 30. The driving member 21 and the following member 23 are pressed onto each other, whereby a torque is transmitted between the driving member 21 and the following member 23. The clutch 20 is, for example, a multiple disks friction clutch.

The transmission apparatus 30 has a plurality of gears 1i to 5i mounted on the drive shaft 31 and a plurality of gears 1h to 5h mounted on the driven shaft 32. The gears 1i and 1h are engaged with each other, with a reduction ratio thereof corresponding to the 1 st gear level. The gears 2i and 2h are engaged with each other, with a reduction ratio thereof corresponding to the 2nd gear level. The gears 3i and 3h are engaged with each other, with a reduction ratio thereof corresponding to the 3rd gear level. The gears 4i and gear 4h are engaged with each other, with a reduction ratio thereof corresponding to the 4th gear level. The gears 5i and 5h are engaged with each other, with a reduction ratio thereof corresponding to the 5th gear level.

In each of the gear pairs corresponding to the respective gear levels, one gear is an idling gear capable of relative rotation relative to the shaft on which the gear is mounted (corresponding to the first gear of the above described transmission apparatus according to the present teaching), being rotatable at a speed different from that of the shaft on which that idling gear itself is mounted. Meanwhile, the other gear is a stationary gear incapable of relative rotation relative to the shaft on which the gear is mounted (corresponding to the second gear of the above described transmission apparatus according to the present teaching), being integrally rotatable with the shaft on which that stationary gear itself is mounted at a speed same as that of the shaft. In this embodiment, the gears 1h to 4h, 5i are idling gears, while the gears 1i to 4i, 5h are stationary gears. That is, of the gears 1i to 5i mounted on the drive shaft 31, the gear 5i, or an idling gear, is mounted relatively rotatable on the drive shaft 31, while the gears 1i to 4i, or stationary gears, are mounted incapable of relative rotation on the drive shaft 31. Meanwhile, of the gears 1h to 5h mounted on the driven shaft 32, the gears 1h to 4h, or idling gears, are mounted relatively rotatable on the driven shaft 32, while the gear 5h, or a stationary gear, is mounted incapable of relative rotation on the driven shaft 32.

In the following description, the gears 1h to 4h, 5i, or idling gears, are referred to also as "idling gears 1h to 4h, 5i", while the gears 1i to 4i, 5h, or stationary gears, as "stationary gears 1i to 4i, 5h".

The idling gears 1h to 4h, 5i are mounted on respective thin wall collars 35 fit to the respective drive shaft 31 and driven shaft 32, thus remaining capable of relative rotation relative to the respective shafts. Specifically, while the thin wall collar 35 is spline-connected to the drive shaft 31 or the driven shaft 32, thus remaining incapable of relative rotation relative to the shaft, the idling gears 1h to 4h, 5i are not spline-connected to the respective thin wall collars 35 and are capable of relative rotation relative to the respective shafts. Therefore, although the thin wall collar 35 rotates integrally with at the same speed as that of the drive shaft 31 or the driven shaft 32, the idling gears 1h to 4h, 5i can rotate at a speed different from that of the drive shaft 31 or the driven shaft 32.

Meanwhile, the gears 2i to 4i, 5h among the stationary gears 1i to 4i, 5h are spline-connected to the drive shaft 31 and the driven shaft 32, respectively, thus remaining incapable of relative rotation relative to the shaft. Specifically, grooves 31d, 32d are formed along the axial direction on the respective outer circumferential surfaces of the drive shaft 31 and the driven shaft 32; grooves (not shown) are formed along the axial direction on the respective inner circumferential surfaces of the gears 2i to 4i, 5h; the gears 2i to 4i, 5h are engaged with the drive shaft 31 and the driven shaft 32, respectively. Note that the gear 1i is formed directly on the drive shaft 31. The groove 31d of the drive shaft 31 is continuous in the axial direction between the gear 1i and the bearing 17 mounted on the drive shaft 31, while the groove 32d of the driven shaft 32 is continuous in the axial direction between the bearings 18 and 19.

The transmission apparatus 30 further has a plurality of rail collars 33 mounted incapable of relative rotation on the respective drive shaft 31 and driven shaft 32, and a plurality of selectors 34 mounted on the respective rail collars 33 so as to be incapable of relative rotation relative to the respective rail collars 33 but capable of movement in the axial direction. The rail collar 33 is spline-connected to the drive shaft 31 or the driven shaft 32, thus remaining incapable of relative rotation relative to the shaft. Specifically, the grooves 31d, 32d are formed along the axial direction on the respective outer circumferential surfaces of the drive shaft 31 and the driven shaft 32; grooves (not shown) are formed along the axial direction on the respective inner circumferential surfaces of the rail collars 33; each rail collar 33 is engaged with the drive shaft 31 or the driven shaft 32.

Each rail collar 33 is positioned adjacent to the respective idling gear 1h to 4h, 5i. Specifically, the rail collar 33p mounted on the drive shaft 31 is positioned adjacent to and in contact with the gear 5i. The rail collar 33q mounted on the driven shaft 32 is positioned between and in contact with the gear 1h and the gear 3h. The rail collar 33r mounted on the driven shaft 32 is positioned between and in contact with the gear 2h and the gear 4h (specifically, in contact with the gear 4h via a washer 372).

As shown in FIG. 3, under a condition in which a drive force is transmitted from the drive shaft 31 to the driven shaft 32 via the gear 3h and the selector 34 (a condition in which the selector 34 is positioned as indicated by the long dashed double-short line in the diagram), an engaging part W3 of the gear 3h that is engaged with the gear 3i is positioned overlapping in the diameter direction an engaging part W4 of the selector 34 that is engaged with the rail collar 33. That is, an end of the engaging part W4 in the axial direction is positioned in the range in the axial direction of the engaging part W3, and similarly, an end in the axial direction of the engaging part W3 is positioned in the range in the axial direction of the engaging part W4. Specifically, a concave 34f is formed on a lateral surface of the gear 3h opposite the rail collar 33, so that an inner portion of the gear 3h in the diameter direction is less wide in the axial direction than an outer portion including a tooth for engaging with the gear 3i. An end portion of the rail collar 33 is inserted into the concave 34f, being thereby positioned in the range in the axial direction of the engaging part W3 of the gear 3h that is engaged with the gear 3i. The groove 33d formed on the outer circumferential surface of the rail collar 33 also is positioned in the range in the axial direction of the engaging part W3 of the gear 3h that is engaged with the gear 3i. The gear 3h has an opposite surface 34d formed inside the concave 34f so as to be opposite the rail collar 33 in the axial direction. The concave 34f has a dented portion that is dented in the direction departing from the selector 34 more than the opposite surface 34d, and the dented portion of the concave 34f functions as a dog hole 34c.

The selector 34 is spline-connected to the rail collar 33, thereby remaining incapable of relative rotation relative to the rail collar 33 but movable in the axial direction. Specifically, the groove 33d (see FIG. 3) is formed along the axial direction on the outer circumferential surface of the rail collar 33; another groove (not shown) is formed along the axial direction on the inner circumferential surface of the selector 34; the selector 34 is engaged with the rail collar 33. Further, an engaging groove 34a is formed on the middle portion in the axial direction of the selector 34, and the shift fork 38 is engaged with the engaging groove 34a. The shift fork 38 moves the selector 34 in the axial direction in response to an operation of a shift drum (not shown). That is, when the selector 34 moves in the axial direction, following an operation of the shift drum, as described above, paths for transmitting a drive force from the drive shaft 31 to the driven shaft 32 via the idling gears 1h to 4h, 5i, and the stationary gears 1i to 4i, 5h are switched, whereby gear levels are consequently shifted.

Note that the two-wheeled motor vehicle 1 may be of a type in which the shift drum rotates following a pedal operation by a driver or of a type in which the shift drum is rotated by an actuator.

Each selector 34 has a dog tooth 34b projecting towards the respective idling gear 1h to 4h, 5i. The dog tooth 34b of the selector 34 is able to be engaged with_the dog hole 34c of the idling gear 1h to 4h, 5i. When the dog tooth 34b of the selector 34 remains engaged with the dog hole 34c of the idling gear 1h to 4h, 5i, a torque is transmitted from the drive shaft 31 to the driven shaft 32 via the rail collar 33, the selector 34, the idling gear 1h to 4h, 5i, and the stationary gear 1i to 4i, 5h.

In shifting the gear levels, a condition in which a gear at a gear level before shifting (a pre-shifting gear) among the idling gears 1h to 4h, 5i is engaged with a selector 34 at a gear level before shifting is switched to a condition in which a gear at a gear level after the shifting (a post-shifting gear) is engaged with a selector 34 at a gear level after the shifting. For example, in shifting from the 2nd gear level to the 3rd gear level, the selector 34 engaged with the gear 2h, that is, a pre-shifting gear, moves in a direction departing from the gear 2h, whereby the engagement is released (dog disengagement). Thereafter, another selector 34 moves toward and is engaged with the gear 3h, that is, a post-shifting gear (dog engagement). This is similarly applicable to the other gear levels. This aspect, however, is not limiting, and a selector 34 engaged with a pre-shifting gear may be the same as a selector 34 engaged with a post-shifting gear.

Below, shifting from the 2nd gear level to the 3rd gear level will be more specifically described. At dog disengagement, when the selector 34 moves in a direction departing from the gear 2h, or a pre-shifting gear, the dog tooth 34b of the selector 34 is removed from the dog hole 34c of the gear 2h, whereby the engagement is released. At dog engagement, on the other hand, when the selector 34 moves toward the gear 3h, or a post-shifting gear, the dog tooth 34b of the selector 34 is inserted into the dog hole 34c of the gear 3h, whereby engagement is completed. The long dashed double-short dashed line in FIG. 3 indicates the position of the selector 34 after establishment of dog engagement. The dog tooth 34b of the selector 34 may abut on the opposite surface 34d of the gear 3h, which is referred to as dog abutment.

FIG. 2 shows a condition in which the gear level is set to neither level, that is, all selectors 34 stay at neutral position. With the selector 34 at a neutral position, the dog tooth 34b of the selector 34 is not inserted in the dog hole 34c of the idling gear 1h to 4h, 5i, but remains in the range in the axial direction of an engaging part of the idling gear 1h to 4h, 5i that is engaged with the stationary gear 1i to 4i, 5h. For example, as shown in FIG. 3, when the selector 34 stays at a neutral position, the tip end of the dog tooth 34b is positioned outside the dog hole 34c but remains in the range in the axial direction of the engaging part W3 of the gear 3h that is engaged with the gear 3i.

The drive shaft 31 and the driven shaft 32 further have a plurality of thin wall collars 35 mounted on the inner side in the diameter direction of the respective idling gears 1h to 4h, 5i, and a plurality of spacer collars 36 mounted adjacent to the respective stationary gears 1i to 4i, 5h. The thin wall collar 35 is spline-connected to the drive shaft 31 or the driven shaft 32. An oil through opening 35a is formed on the thin wall collar 35 for passing lubricant supplied via an oil through hole 32a formed on the drive shaft 31 or the driven shaft 32 (see FIG. 3). One end of the thin wall collar 35 in the axial direction is in contact with the rail collar 33.

The other end of the thin wall collar 35 in the axial direction is in contact with a thick wall member, such as the stationary gear 1i to 4i, 5h, the spacer collar 36, and so forth, which is thicker in the diameter direction than the thin wall collar 35 itself. Specifically, the thin wall collar 35 where the gear 5i is mounted is in contact with the gear 3i, while the thin wall collar 35 where the gear 3h is mounted is in contact with the gear 5h. The thin wall collar 35 where the gear 4h is mounted is in contact with the spacer collar 36. The thin wall collar 35 where the gear 1h is mounted is in contact with the drive gear 39. The thin wall collar 35 where the gear 2h is mounted is in contact with the clip 373. In this embodiment, the above mentioned gears 3i, 5h, spacer collar 36, drive gear 39, and clip 37 correspond to the thick wall member.

As described above, the thin wall collar 35 is sandwiched by the rail collar 33 and the thick wall member, both being thicker in the diameter direction than the thin wall collar 35. This leaves a concave space above the thin wall collar 35 between the rail collar 33 and the thick wall member. The idling gear 1h to 4h, 5i is mounted on the respective thin wall collar 35 between the rail collar 33 and the thick wall member, thereby remaining relatively rotatable relative to the drive shaft 31 or the driven shaft 32 and whereby the position thereof in the axial direction is determined. For example, as shown in FIG. 3, the gear 3h is mounted on the thin wall collar 35 between the rail collar 33 and the gear 5h, and the insertion portion 34e of the gear 3h to be inserted into the concave space above the thin wall collar 35 between the rail collar 33 and the stationary gear 5h is slightly shorter in the axial direction than the thin wall collar 35.

A spacer collar 36 is mounted on one of the drive shaft 31 and the driven shaft 32 so as to overlap in the diameter direction the rail collar 33 mounted on the other of the drive shaft 31 and the driven shaft 32. No groove is formed on the inner and outer circumferential surfaces of the spacer collar 36. Each spacer collar 36 is positioned adjacent to the respective stationary gear 1i to 4i, 5h. Specifically, one of the spacer collars 36 mounted on the drive shaft 31 is positioned between and in contact with the gears 2i and 4i, and the other spacer collar 36 mounted on the drive shaft 31 is positioned between and in contact with the gears 1i and 3i. The spacer collar 36 mounted on the driven shaft 32 is positioned between and in contact with the gears 4h and 5h.

As shown in FIG. 2, the groove 31d is formed on the drive shaft 31 between the gear 1i and bearing 17 both mounted on the drive shaft 31, and the spacer collar 36, gear 3i, thin wall collar 35, rail collar 33, gear 4i, spacer collar 36, and gear 2i are mounted between the gear 1i and the bearing 17 in this order from the side of the gear 1i. These members inserted into the drive shaft 31 are inserted into the drive shaft 31 so as to be movable in the axial direction but fixed in the axial direction as remaining in contact with the adjacent members. That is, a force in the axial direction exerted from one of the gear 1i and the bearing 17 can be transmitted through these members to the other, and these members are fixed in the axial direction by exerting a force in the axial direction to one another.

Meanwhile, the groove 32d is formed on the drive shaft 32 between the bearings 18 and 19, and the washer 371, drive gear 39, thin wall collar 35, rail collar 33, thin wall collar 35, gear 5h, spacer collar 36, thin wall collar 35, rail collar 33, washer 372, thin wall collar 35, and clip 373 are mounted between the bearings 17 and 18 in this order from the side of the bearing 18. These members inserted into the driven shaft 32 are inserted into the driven shaft 32 so as to be movable in the axial direction but fixed in the axial direction as remaining in contact with the adjacent members. That is, a force in the axial direction exerted from one of the bearings 18 and 19 can be transmitted through these members to the other, and these members are fixed in the axial direction by exerting a force in the axial direction to one another.

In the above described embodiment, when the dog tooth 34b of the selector 34 is engaged with the dog hole 34c of the idling gear 1h to 4h, 5i, an engaging part of the idling gear 1h to 4h, 5i that is engaged with the stationary gear 1i to 4i, 5h overlaps in the diameter direction an engaging part of the selector 34 that is engaged with the rail collar 33. For example, as shown in FIG. 3, the engaging part W4 of the selector 34 after establishment of dog engagement, the engaging part W4 being engaged with the rail collar 33 partially overlaps in the diameter direction the engaging part W3 of the gear 3h that is engaged with the gear 3i. That is, an end of the engaging part W4 in the axial direction is positioned in the range in the axial direction of the engaging part W3, and similarly, an end in the axial direction of the engaging part W3 is positioned in the range in the axial direction of the engaging part W4. The distance between the end of the engaging part W3 farther from the selector 34 and the end of the engaging part W4 farther from the gear 3h is shorter than the sum of the widths of the engaging parts W3 and W4. Therefore, as parts of a drive force transmitting path from the drive shaft 31 via the gear 3i, the gear 3h, the selector 34, and the rail collar 33 to the driven shaft 32 are positioned adjacent to each other in the axial direction, it is possible to prevent the gears 3i, 3h from inclining when transmitting of a drive force.

In this embodiment, as the selector 34 is mounted on the rail collar 33, the thickness of the selector 34 in the diameter direction is smaller than that in an example (hereinafter referred to a reference example) in which no rail collar 33 is provided so that the selector is engaged directly with the shaft. This makes the selector 34 relatively light-weighted. Further, the distance between a part of the selector 34 that is engaged with the rail collar 33 and the rotational center in the diameter direction is larger than the distance in the diameter direction between a part of the selector that is engaged directly with the shaft and the rotational center in the reference example. Therefore, a load that is applied to the selector 34 when transmitting a torque in this embodiment is smaller than that which is applied to the selector when transmitting the same amount of torque in the reference example. With the above, a smaller load is applied in shifting the gear levels, and thus it is possible to reduce the transmission period of time.

In this embodiment, due to absence of a gear, the selector 34 is light weighted, compared to related art, and further, a load applied in shifting can be reduced, and thus a transmission period of time can be reduced. Further, as the selector 34 has no gear, it is possible to form the concave 34f (see FIG. 3) on the respective idling gear 1h to 4h, 5i, into which the end portions of the rail collar 33 and the selector 34 are inserted, or to prevent enlargement in the size in the diameter direction of the concave 34f to thereby ensure the strength of the idling gear 1h to 4h, 5i.

Note that, in this embodiment, as the selector 34 has no gear, an increased number of members are mounted on the drive shaft 31 and the driven shaft 32, compared to related art. However, as it is possible to prevent the gear from inclining when transmitting a drive force in this embodiment, as described above, and thus to prevent local abrasion of the gear, it is possible to reduce the size in the axial direction of each gear. Therefore, it is possible to prevent increase of the width of the transmission apparatus 30 even though an increased number of members are mounted on the drive shaft 31 and the driven shaft 32, compared to related art.

In this embodiment, the concave 34f (see FIG. 3) is formed on the lateral surface of the idling gear 1h to 4h, 5i, and an end of the rail collar 33 in the axial direction is located in the concave 34f. With the above, the groove 33d formed on the outer circumferential surface of the rail collar 33 is positioned in the range in the axial direction of the engaging part W3 of the gear 3h that is engaged with the gear 3i. That is, it is readily possible to have the engaging part W4 of the selector 34 after establishment of dog engagement, the engaging part W4 being engaged with the rail collar 33, to be positioned overlapping the engaging part W3 for engagement between the gears.

In this embodiment, the thin wall collar 35 is mounted fixed in the axial direction as remaining in contact with the rail collar 33, and the idling gears 1h to 4h, 5i are mounted on the thin wall collar 35. That is, in this embodiment, no circlip or the like is provided between the rail collar 33 and the thin wall collar 35, and the rail collar 33 remains in direct contact with the thin wall collar 35. With the above, it is readily possible to have the groove 33d formed on the outer circumferential surface of the rail collar 33 to be positioned inside the concave 34f (see FIG. 3) of the idling gear 1h to 4h, 5i whereby the engaging part W4 of the selector 34 after establishment of dog engagement, the engaging part W4 being engaged with the rail collar 33, is positioned partially overlapping in the diameter direction the engaging part W3 for engagement between the gears.

In this embodiment, a thick wall member is provided in a direction opposite from the rail collar 33 relative to the thin wall collar 35, being fixed in the axial direction as remaining in contact with the thin wall collar 35. For example, as shown in FIG. 3, the thin wall collar 35 is sandwiched between and in contact with the rail collar 33 and the gear 5h functioning as a thick wall member. The insertion portion 34e of the gear 3h, which is inserted into the concave space formed above the thin wall collar 35 between the rail collar 33 and the stationary gear 5h, is shorter in the axial direction than the thin wall collar 35. With the above, it is possible to prevent the gear 3h from receiving a force in the axial direction that is exerted by the rail collar 33 and the gear 5h, and thus from being hindered in rotating.

In this embodiment, the members inserted into the drive shaft 31 and the driven shaft 32, such as the stationary gears 1i to 4i, 5h, rail collar 33, thin wall collar 35, spacer collar 36, and the like, are inserted so as to be movable in the axial direction but fixed in the axial direction as remaining in contact with the adjacent members. That is, the respective members are fixed in the axial direction, without using a circlip, by exerting a force in the axial direction to the adjacent members. As described above, fixing the respective members in the axial direction without using a circlip can reduce the width of the transmission apparatus 30.

In this embodiment, the spacer collar 36 is mounted on one of the drive shaft 31 and the driven shaft 32 so as to overlap in the diameter direction the rail collar 33 mounted on the other. That is, the spacer collar 36 is mounted adjacent to the stationary gear 1i to 4i, 5h, corresponding to the rail collar 33 adjacent to the idling gear 1h to 4h, 5i. With the above, it is possible, using the spacer collar 36, to maintain the stationary gear 1i to 4i, 5h at a position for engagement with the idling gear 1h to 4h, 5i.

In this embodiment, the selector 34 mounted between the gear 1h and the gear 3h of the driven shaft 32 has the same shape as that of the selector 34 mounted between the gear 2h and the gear 4h of the driven shaft 32. As a plurality of selectors 34 have the same shapes, as described above, it is possible to reduce manufacturing cost of the transmission apparatus 30.

According to the embodiment it is provided a transmission apparatus capable of preventing a gear from inclining when transmitting a drive force. In a transmission apparatus 30 according to the present teaching, first gears 1h to 4h each having a dog hole 34c are mounted relatively rotatable on a driven shaft 32. A rail collar 33 is mounted not relatively rotatably on the driven shaft 32. A selector 34 has a dog tooth 34b and is spline-connected to the rail collar 33 while remaining not relatively rotatably relative to the rail collar 33 but movable in the axial direction. The second gears 1i to 4i are mounted not relatively rotatably on the drive shaft 31 and engaged with the respective first gears 1h to 4h. When the dog tooth 34b of the selector 34 is engaged with the dog hole 34c of the first gear 1h to 4h, a part of the first gear 1h to 4h that is engaged with the second gear 1i to 4i and a part of the selector 34 that is engaged with the rail collar 33 are overlapped in the diameter direction.

## Claims

1. A dog clutch-type transmission apparatus, comprising:
a drive shaft (31);
a driven shaft (32);
a first gear (1h to 4h) having a dog hole (34c) and mounted capable of relative rotation on one of the drive shaft (31) and the driven shaft (32);
a selector (34) having a dog tooth (34b) capable of movement in the axial direction;
a shift fork (38) for moving the selector (34) in the axial direction; and
a second gear (1i to 4i) mounted incapable of relative rotation on another of the drive shaft (31) and the driven shaft (32), for being engaged with the first gear (1h to 4h),
**characterized by**
a rail collar (33) mounted incapable of relative rotation on the one of the drive shaft (31) and the driven shaft (32), and the first gear (1h to 4h) has an opposite surface (34d) to be opposite to the rail collar (33) in the axial direction, wherein
the selector (34) having the dog tooth (34b) is spline-connected to the rail collar (33) so as to be incapable of relative rotation relative to the rail collar (33), and
when a drive force is transmitted from the drive shaft (31) to the driven shaft (32) via the first gear (1h to 4h), the rail collar (33), the selector (34), and the second gear (1i to 4i), a part of the first gear (1h to 4h) that is engaged with the second gear (1i to 4i) is positioned and a part of the selector (34) that is engaged with the rail collar (33) are overlapped in the diameter direction.

2. A transmission apparatus according to claim 1, **characterized in that** the selector (34) has no gear.

3. A transmission apparatus according to claim 1 or 2, **characterized in that** a concave is formed on a lateral surface of the first gear (1h to 4h), and
an end portion of the rail collar (33) in the axial direction is positioned inside the concave.

4. A transmission apparatus according to at least one of the claims 1 to 3, **characterized by** a thin wall collar mounted between the one of the drive shaft (31) and the driven shaft (32) and the first gear (1h to 4h) while being fixed in the axial direction in contact with the rail collar (33), the thin wall collar having a thickness in the diameter direction smaller than a thickness in the diameter direction of the rail collar (33), wherein
the first gear (1h to 4h) is mounted capable of relative rotation on the thin wall collar.

5. A transmission apparatus according to claim 4, **characterized by** a thick wall member mounted on the one of the drive shaft (31) and the driven shaft (32) at a position opposite from the rail collar (33) relative to the thin wall collar while being fixed in the axial direction in contact with the thin wall collar, the thick wall member having a thickness in the diameter direction larger than a thickness in the diameter direction of the thin wall collar, wherein
a part of the first gear (1h to 4h) that is inserted into a space formed between the rail collar (33) and the thick wall member is shorter than the thin wall collar.

6. A transmission apparatus according to claim 5, **characterized in that** a plurality of members, including the rail collar (33), the thin wall collar, and the thick wall member, are fit to the one of the drive shaft (31) and the driven shaft (32) so as to be capable of movement in the axial direction, and fixed in the axial direction as each of the members is remained in contact with an adjacent one of the members.

7. A transmission apparatus according to at least one of the claims 1 to 6, **characterized in that** a space collar is mounted on the other of the drive shaft (31) and the driven shaft (32) at a position overlapping in the diameter direction the rail collar (33) mounted on the one of the drive shaft (31) and the driven shaft (32), while being fixed in the axial direction as remaining in contact with the second gear (1i to 4i).

8. A transmission apparatus according to at least one of the claims 1 to 7, **characterized in that** a plurality of the selectors (34) are mounted on the drive shaft (31) and the driven shaft (32), and
the plurality of the selectors (34) has the same shape.

9. A vehicle having the transmission apparatus according to any of claims 1 to 8.

## Patentansprüche

1. Eine Klauen-Kupplungs-Typ-Getriebevorrichtung, die umfasst:
eine Antriebswelle (31);
eine angetriebene Welle (32);
ein erstes Zahnrad (1h bis 4h), das ein Klauen-Loch (34c) hat, und montiert ist, imstande zur relativen Drehung auf einer von der Antriebswelle (31) und der angetriebenen Welle (32);
einen Selektor (34), der einen Klauen-Zahn (34b) hat, imstande zur Bewegung in der Axialrichtung ist;
eine Schaltgabel (38), zur Bewegung des Selektors in die Axialrichtung; und
ein zweites Zahnrad (1i bis 4i), das montiert ist, außerstande zur relativen Drehung auf der anderen von der Antriebswelle (31) und der angetriebenen Welle (32), und um mit dem ersten Zahnrad (1i bis 4i) in Eingriff zu sein,
**gekennzeichnet durch**
einen Schienen-Kragen (33) der montiert ist, außerstande zur relativen Drehung auf der einen von der Antriebswelle (31) und der angetriebenen Welle (32), und das erste Zahnrad (1h bis 4h) hat eine gegenüberliegende Fläche (34d), die in der Axialrichtung gegenüberliegend zu dem Schienen-Kragen (33) ist, wobei
der Selektor (34), der den Klauen-Zahn (34b) hat, keilverbunden mit dem Schienen-Kragen (33) ist, so dass dieser außerstande zur relativen Drehung zu dem Schienen-Kragen (33) ist, und
wenn eine Antriebskraft von der Antriebswelle (31) zu der angetriebenen Welle (32) über das erste Zahnrad (1h bis 4h), den Schienen-Kragen (33), den Selektor (34), und das zweite Zahnrad (1i bis 4i) übertragen ist, ist ein Teil des ersten Zahnrads (1h bis 4h), welches mit dem zweiten Zahnrad 1i bis 4i) eingreift, positioniert, und ein Teil des Selektors (34), der mit dem Schienen-Kragen (33) eingreift, sind in der Durchmesserrichtung überlappend.

2. Eine Getriebevorrichtung gemäß Anspruch 1, **dadurch gekennzeichnet, dass** der Selektor (34) kein Zahnrad hat.

3. Eine Getriebevorrichtung gemäß Anspruch 1 oder 2, **dadurch gekennzeichnet, dass** eine Konkavität an einer Querfläche des ersten Zahnrads (1h bis 4h) ausgebildet ist, und
ein Endabschnitt des Schienen-Kragens (33) in der Axialrichtung innerhalb der Konkavität positioniert ist.

4. Eine Getriebevorrichtung gemäß zumindest einem der Ansprüche 1 bis 3, **gekennzeichnet durch** einen dünnwandigen Kragen, der zwischen der einen von der Antriebswelle (31) und der angetriebenen Welle (32) und dem ersten Zahnrad (1h bis 4h) montiert ist, während dieser in der Axialrichtung in Kontakt mit dem Schienen-Kragen (33) fixiert ist, der dünnwandige Kragen hat eine Dicke in der Durchmesserrichtung, die kleiner als eine Dicke in der Durchmesserrichtung des Schienen-Kragens (33) ist, wobei das erste Zahnrad (1i bis 4h) montiert ist, imstande zur relativen Drehung mit dem dünnwandigen Kragen.

5. Eine Getriebevorrichtung gemäß Anspruch 4, **gekennzeichnet durch** ein dickwandiges Element, das auf einer von der Antriebswelle (31) und der angetriebenen Welle (32) montiert ist, an einer Position gegenüber zu dem Schienen-Kragen (33), relativ zu dem dünnwandigen Kragen, während es in der Axialrichtung in Kontakt mit dem dünnwandigen Kragen fixiert ist, das dickandige Element hat eine Dicke in der Durchmesserrichtung, die größer als eine Dicke in der Durchmesserrichtung des dünnwandigen Kragens ist, wobei ein Teil des ersten Zahnrads (1h bis 4h), das in einen Raum eingesetzt ist, der zwischen dem Schienen-Kragen (33) und dem dickwandigen Element ausgebildet ist, kürzer ist als der dünnwandige Kragen.

6. Eine Getriebevorrichtung gemäß Anspruch 5, **dadurch gekennzeichnet, dass** eine Mehrzahl von Elementen, welche den Schienen-Kragen (33), den dünnwandigen Kragen, und das dickwandige Element beinhalten, auf der einen von der Antriebswelle (31) und der angetriebenen Welle (32) gesetzt sind, so dass diese imstande zur Bewegung in der Axialrichtung sind, und fixiert sind in der Axialrichtung soweit jedes von den Elementen in Kontakt mit einem benachbarten von den Elementen verbleibt.

7. Eine Getriebevorrichtung gemäß zumindest einem der Ansprüche 1 bis 6, **dadurch gekennzeichnet, dass** ein Raum-Kragen montiert ist, an der anderen von der Antriebswelle (31) und der angetriebenen Welle (32), an einer Position, überlappend in der Durchmesserrichtung des Schienen-Kragens (33), montiert an der einen von der Antriebswelle (31) an der angetriebenen Welle (32), während dieser in der Axialrichtung fixiert ist, soweit ein Kontakt mit dem zweiten Zahnrad (1i bis 4i) besteht.

8. Eine Getriebevorrichtung gemäß zumindest einem der Ansprüche 1 bis 7, **dadurch gekennzeichnet, dass** eine Mehrzahl von Selektoren (34) an der Antriebswelle (31) und der angetriebenen Welle (32) montiert sind und
die Mehrzahl von Selektoren (34) die gleiche Form hat.

9. Ein Fahrzeug, welches die Getriebevorrichtung gemäß irgendeinem der Ansprüche 1 bis 8 hat.

## Revendications

1. Dispositif de transmission de type embrayage à crabots, comprenant :
un arbre d'entraînement (31) ;
un arbre entraîné (32) ;
un premier engrenage (1h à 4h) disposant d'un trou de crabot (34c) et installé de sorte à être capable de rotation relative sur un de l'arbre d'entraînement (31) et l'arbre entraîné (32) ;
un sélecteur (34) disposant d'une dent de crabot (34b) capable de mouvement dans la direction axiale ;
une fourchette de sélection (38) pour le déplacement du sélecteur (34) dans la direction axiale ; et
un deuxième engrenage (1i à 4i) installé de sorte à être incapable de rotation relative sur un autre de l'arbre d'entraînement (31) et l'arbre entraîné (32), pour être mis en contact avec le premier engrenage (1h à 4h),
**caractérisé par**
un collier de rail (33) installé de sorte à être incapable d'une rotation relative sur l'un de l'arbre d'entraînement (31) et l'arbre entraîné (32), et le premier engrenage (1h à 4h) présente une surface opposée (34d) à opposer au collier de rail (33) dans la direction axiale, dans lequel
le sélecteur (34) disposant de la dent de crabot (34b) est connecté par cannelures au collier de rail (33) de sorte à être incapable de rotation relative par rapport au collier de rail (33), et
lorsqu'une force d'entraînement est transmise de l'arbre d'entraînement (31) à l'arbre entraîné (32) via le premier engrenage (1h à 4h), le collier de rail (33), le sélecteur (34), et le deuxième engrenage (1i à 4i), une partie du premier engrenage (1h à 4h) qui est mise en contact avec le deuxième engrenage (1i à 4i) est positionnée et une partie du sélecteur (34) qui est mise en contact avec le collier de rail (33) présentent un chevauchement dans la direction diamétrale.

2. Dispositif de transmission selon la revendication 1, **caractérisé en ce que** le sélecteur (34) ne présente aucun engrenage.

3. Dispositif de transmission selon la revendication 1 ou 2, **caractérisé en ce que** une zone concave est formée sur une surface latérale du premier engrenage (1h à 4h), et une partie d'extrémité du collier de rail (33) dans la direction axiale est positionnée à l'intérieur de la zone concave.

4. Dispositif de transmission selon au moins une des revendications 1 à 3, **caractérisé par** un collier à paroi fine installé entre l'un de l'arbre d'entraînement (31) et l'arbre entraîné (32) et le premier engrenage (1h à 4h) tout en étant maintenu dans la direction axiale en contact avec le collier de rail (33), le collier à paroi fine présentant une épaisseur dans la direction diamétrale inférieure à une épaisseur dans la direction diamétrale du collier de rail (33), dans lequel le premier engrenage (1h à 4h) est installé de sorte à être capable de rotation relative sur le collier à paroi fine.

5. Dispositif de transmission selon la revendication 4, **caractérisé par** un élément à paroi épaisse installé sur l'un de l'arbre d'entraînement (31) et l'arbre entraîné (32) à un emplacement opposé au collier de rail (33) par rapport au collier à paroi fine tout en étant maintenu dans la direction axiale en contact avec le collier à paroi fine, l'élément à paroi épaisse présentant une épaisseur dans la direction diamétrale supérieure à une épaisseur dans la direction diamétrale du collier à paroi fine, dans lequel
une partie du premier engrenage (1h à 4h) qui est insérée dans un espace formé entre le collier de rail (33) et l'élément à paroi épaisse est plus courte que le collier à paroi fine.

6. Dispositif de transmission selon la revendication 5, **caractérisé en ce qu'**une pluralité d'éléments, notamment le collier de rail (33), le collier à paroi fine, et l'élément à paroi épaisse, sont fixés à l'un de l'arbre d'entraînement (31) et l'arbre entraîné (32) de sorte à être capables de mouvement dans la direction axiale, et maintenus dans la direction axiale tandis que chacun des éléments reste en contact avec un adjacent des éléments.

7. Dispositif de transmission selon au moins une des revendications 1 à 6, **caractérisé en ce qu'**un collier d'espacement est installé sur l'autre de l'arbre d'entraînement (31) et l'arbre entraîné (32) à un emplacement qui chevauche dans la direction diamétrale le collier de rail (33) installé sur l'un de l'arbre d'entraînement (31) et l'arbre entraîné (32), tout en étant maintenu dans la direction axiale pour rester en contact avec le deuxième engrenage (1i à 4i).

8. Dispositif de transmission selon au moins une des revendications 1 à 7, **caractérisé en ce qu'**une pluralité de sélecteurs (34) sont installés sur l'arbre d'entraînement (31) et l'arbre entraîné (32), et la pluralité de sélecteurs (34) présente la même forme.

9. Véhicule disposant du dispositif de transmission selon une parmi les revendications 1 à 8.
